# EUROPEAN PATENT SPECIFICATION

(11) **EP 4 559 612 B1**
(45) Date of publication and mention of the grant of the patent: **29.07.2026**
(21) Application number: 24182596.7
(22) Date of filing: 17.06.2024
(51) Int. Cl.: B23K 9/095, B23K 9/12, B23K 9/16, B23K 9/32, B23K 37/02, B25J 13/02

(54) **WELDING ROBOT**
SCHWEISSROBOTER
ROBOT DE SOUDAGE

(30) Priority: 21.11.2023 JP 2023197248
(43) Date of publication of application: 28.05.2025
(73) Proprietor: DAIHEN Corporation, Yodogawa-ku Osaka-shi Osaka 532-8512 (JP)
(72) Inventor: FUJISAWA, Sho, Osaka-shi, Osaka, 5328512 (JP)
(74) Representative: Manitz Finsterwald Patent- und Rechtsanwaltspartnerschaft mbB

(56) References cited:
- DE-A1- 102007 044 974
- JP-A- 2015 199 174
- US-A1- 2021 260 750
- US-A1- 2023 142 821

## Description

The present invention relates to a welding robot, see claim 1.

### Description of Related Art

The Patent Publication JP-A-2015-199174 (describing the preamble of claim 1) shows, with regard to a so-called general human-cooperative type robot, an art of direct teaching, by which robot-teaching can be performed more easily than using a teach-pendant by a lead-through operation in which a worker manually teaches to the robot a taught position, and by which the robot can be moved easily by a handle at the time of the direct-teaching. A method to modify a program for robotic welding is disclosed in US 2021/260750 A1. DE 10 2007 044974 A1 relates to a mobile, manually transportable device for the manual joining or manual working of workpieces.

### Summary

On the other hand, when welding is to be performed by a robot, it is necessary to fix, at first, a work to be joined by a jig or the like and then, the work is tack-welded by manual welding using a welding machine, or the work needs to be tack-welded after the teaching by the robot. In the tack-welding in the former, laborious preparation for performing manual welding is needed, and in the tack-welding in the latter, laborious teaching only for the tack-welding is needed.

Thus, an object of the present invention is to provide a welding robot which can easily perform welding while using the robot without laborious preparation for manual welding or teaching.

A welding robot according to the present invention is defined in claim 1, and inter alia includes a welding torch portion connected to a distal end of an arm which is movable in accordance with an external force, a grasping portion capable of moving the welding torch portion, and a switch portion, and the switch portion is capable of starting arc welding in an ON state and finishing the arc welding in an OFF state.

According to this aspect, the grasping portion capable of moving the welding torch portion which is movable in accordance with the external force can be provided and moreover, it becomes possible that, when the worker brings the switch portion into the ON state, the arc welding is enabled, while if the switch portion is brought into the OFF state, the arc welding is disabled.

Additionally, a switching portion, which switches between a weldable mode in which the performance of the arc welding is enabled and a non-weldable mode in which the performance of the arc welding is disabled, is further provided, and when the switching portion is in the weldable mode, the arc welding is started when the switch portion is brought into the ON state and the arc welding is finished when the switch portion is brought into the OFF state .

By further providing the switching portion which switches between the weldable / non-weldable mode, when the switch portion is brought into the ON state in the weldable mode, the arc welding can be started, while, when the switch portion is brought into the OFF state in the weldable mode, the arc welding can be finished.

The arc welding is not started even when the switch portion is brought into the ON state in the non-weldable mode.

Thus , it can be guarded that the arc welding is not performed.

In the aforementioned embodiment, when the switch portion is in the OFF state, the movement of the welding torch portion in accordance with the external force is disabled, while, when the switch portion is in the ON state, the welding torch portion may move accompanied by movement of the grasping portion.

According to this embodiment, when the worker brings the switch portion into the OFF state, the welding torch portion can be made unmovable even if an external force is applied, and when the worker brings the switch portion into the ON state, the welding torch portion can be made movable by the external force applied to the welding torch portion via the grasping portion.

In the aforementioned embodiment, the switch portion may be provided so as to be located on a lower side of the grasping portion when the worker works by grasping the grasping portion.

According to this embodiment, the worker can perform welding with such a feeling of performing the manual welding by using a general device exclusively for manual welding.

In the aforementioned embodiment, the grasping portion may be a tool which can be mounted in the vicinity of the welding torch portion.

According to this embodiment, when the worker performs a welding work, welding can be performed easily while visually checking the arc generated from the vicinity of a distal end of the welding torch portion and a welding spot.

According to the present invention, a welding robot capable of welding easily while using the robot can be provided without laborious preparation for the manual welding or teaching.

### Brief Description of Drawings

FIG. 1 is a diagram exemplifying a configuration of a robot system including a welding robot according to an Embodiment; and
FIG. 2 is a view with a welding torch portion and a grasping portion constituting the welding robot in FIG. 1 in an enlarged manner.

### Detailed Description

With reference to the attached drawings, preferred embodiments of the present invention will be explained. It is to be noted that, in each drawing, those with the same signs have the same or similar configurations. Moreover, since the drawings are schematic, dimensions and ratios among each constituent element are different from actual ones.

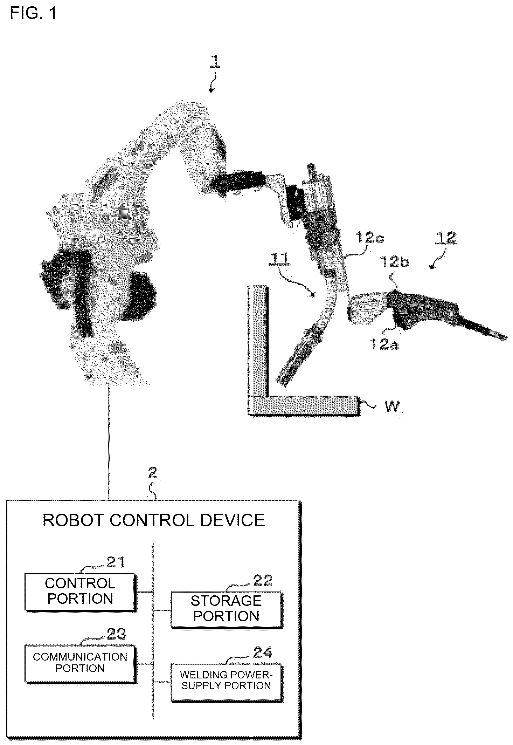

FIG. 1 is a diagram exemplifying a configuration of a robot system including a welding robot 1 according to an Embodiment. The robot system includes the welding robot 1 and a robot control device 2, for example. The welding robot 1 and the robot control device 2 can be connected via a network including wires such as a communication cable or wirelessly. It is to be noted that a teaching pendant may be included in the robot system. The teaching pendant can be connected to the robot control device 2 and is an operation terminal for a worker to teach an operation of the welding robot 1.

The robot control device 2 is a control unit which controls an operation of the welding robot 1 and includes a control portion 21, a storage portion 22, a communication portion 23, and a welding power-supply portion 24, for example.

The control portion 21 is a processor and controls the welding robot 1 and the welding power-supply portion 24 by executing a work program such as a welding program stored in the storage portion 22. The communication portion 23 controls communication with each device connected via a network.

The welding power-supply portion 24 supplies a welding current, a welding voltage and the like to the welding robot 1 in accordance with a processing condition of welding determined in advance in order to generate an arc between a distal end of a welding wire and a work W, for example. The processing condition of welding includes data items such as a welding condition, a welding start position, a welding end position, a welding distance, an attitude of a welding torch and the like, for example. The welding condition includes data items such as a welding current, a welding voltage, a welding speed, a wire feeding speed, a work thickness and the like, for example. The welding power-supply portion 24 may be provided separately from the robot control device 2.

The welding robot 1 is a manipulator which performs arc welding to the work W, which is a welding target, in accordance with the processing condition of the welding set in the robot control device 2. The welding robot 1 has an articulated arm provided on a base member fixed to a floor surface or the like of a plant, a welding torch portion 11, which is one of tools connected to the distal end of the articulated arm, and a grasping portion 12, which is one of the tools which can be mounted on the welding torch portion 11, for example.

The welding robot 1 is a so-called cooperative robot capable of detecting an external force, is a robot that the worker can directly touch the arm so as to perform a direct operation, and is capable of arc welding during the direct operation.

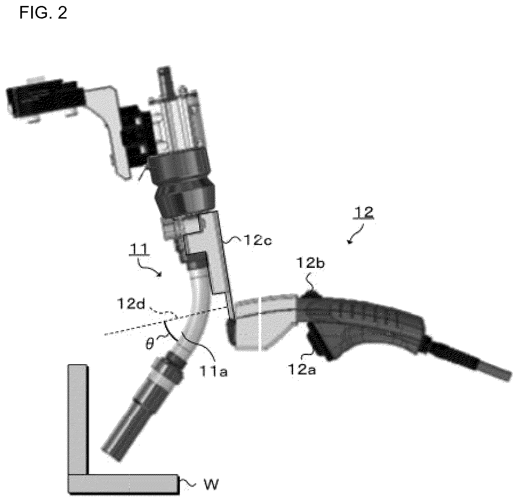

The grasping portion 12 shown in FIG. 1 and FIG. 2 is a tool mounted on the welding torch portion 11 when the welding robot 1 is directly operated.

When the welding robot 1 is directly operated, the worker can move the welding torch portion 11 to the welding spot and weld the welding spot by moving the grasping portion 12 while grasping a main body thereof. The welding may be tack-welding or may be regular welding.

The grasping portion 12 has a switch portion 12a, a switching portion 12b and a mounting portion 12c, for example.

The switch portion 12a is a so-called enable switch. When the switch portion 12a is pressed so as to be brought into an ON state, a servo power-supply is turned on, and the welding robot 1 is brought into an operable state. On the other hand, when the switch portion 12a is released into an OFF state, the servo power-supply is turned off, and the operation of the welding robot 1 is stopped.

The switch portion 12a is preferably provided so as to be located on a lower side of the grasping portion 12 when the worker performs the work by grasping the grasping portion 12. As a result, the worker can perform welding with the same feeling as manual welding using a device exclusively for general manual welding.

Here, when the switch portion 12a is in the OFF state, in order to further enhance safety, the welding robot 1 including the welding torch portion 11 may be set to be manually unmovable (in accordance with the external force). In this case, it is preferable that, when the switch portion 12a is brought into the ON state, the welding robot 1 including the welding torch portion 11 is made operable manually. As a result, when the switch portion 12a is brought into the ON state, by moving the grasping portion 12 by the worker, the welding torch portion 11 can be moved toward the welding spot with the movement.

The switching portion 12b is a button switch which switches a weldable / non-weldable mode of the arc welding of the welding robot 1. The weldable / non-weldable mode of the arc welding includes a weldable mode which enables an arc welding operation and a non-weldable mode which disables the arc welding operation. The worker switches the weldable / non-weldable mode of the arc welding into either one of the weldable mode and the non-weldable mode by operating the switching portion 12b.

By providing the switching portion 12b, the arc welding is controlled as follows together with the operation of the switch portion 12a.

When the weldable / non-weldable mode of the arc welding is the weldable mode, by bringing the switch portion 12a into the ON state, the arc welding is started, while by bringing the switch portion 12a into the OFF state, the arc welding is finished.

When the weldable / non-weldable mode of the arc welding is the non-weldable mode, the arc welding is not performed whichever of the ON state and the OFF state the switch portion 12a is in.

The switching portion 12b is preferably provided at a position on an upper side of the grasping portion 12 and not hidden by the hand of the worker, when the worker performs the operation by grasping the grasping portion 12. As a result, the worker can visually check the switching portion 12b easily and perform the switching operation between the weldable / non-weldable mode of the arc welding easily.

The mounting portion 12c is a member when the grasping portion 12 is to be mounted on the welding torch portion 11. For example, the mounting portion 12c is fitted in the welding torch portion 11 so that the grasping portion 12 can be incorporated in the welding torch portion 11.

Here, the position where the grasping portion 12 is mounted is preferably in the vicinity of the welding torch portion 11. In addition, as shown in FIG. 2, it is preferable that the grasping portion 12 is mounted so that an angle θ formed by an extension line 12d from a main-body upper surface of the grasping portion 12 and a line by a distal end portion 11a of the welding torch portion 11 becomes approximately 40 to 60 degrees. In other words, when the worker performs the welding work, it is preferable that the grasping portion 12 is mounted at the position and by the angle that the welding can be performed easily while visually checking the arc generated from the welding wire located in the vicinity of the distal end of the welding torch portion 11 and the welding spot.

As described above, according to the welding robot 1 according to the Embodiment, by providing the switch portion 12a on the grasping portion 12 capable of moving the welding torch portion 11 movable in accordance with the external force, the arc welding can be performed when the worker brings the switch portion 12a into the ON state, while by bringing the switch portion 12a into the OFF state, the arc welding can be disabled.

Moreover, by providing the switching portion 12b for switching the weldable / non-weldable mode on the grasping portion 12, when the worker brings the switch portion 12a into the ON state in the weldable mode, the arc welding can be started, while by bringing the switch portion 12a into the OFF state in the weldable mode, the arc welding can be finished.

Furthermore, when the worker switches the weldable / non-weldable mode to the non-weldable mode, it is possible to guard so that the arc welding is not performed.

Therefore, according to the welding robot 1 according to the Embodiment, the welding can be performed easily while using the robot without a labor of preparation for the manual welding or teaching.

It is to be noted that the present invention is not limited to the aforementioned Embodiment but can be worked in the other various forms within a range not departing from the scope of the present invention as defined in the appended claims.

For example, in the aforementioned Embodiment, the switch portion 12a and the switching portion 12b are provided on the grasping portion 12, but spots on which the switch portion 12a and the switching portion 12b are provided are not limited to the grasping portion 12. For example, the switch portion 12a and the switching portion 12b may be provided on the main body of the welding robot 1.

## Claims

1. A welding robot (1) comprising:
a welding torch portion (11) connected to a distal end of an arm which is movable in accordance with an external force;
a grasping portion (12) capable of moving the welding torch portion (11); and
a switch portion (12a) configured to be brought into an ON state to start the arc welding and further configured to be brought into an OFF state to finish the arc welding,
**characterized in that** the welding robot (1) further comprises:
another switching portion (12b) configured to be switched between a weldable mode in which performance of arc welding is enabled and a non-weldable mode in which the performance of the arc welding is disabled,
wherein, when the switching portion (12b) is in the weldable mode, the arc welding is started when the switch portion (12a) is brought into the ON state and the arc welding is finished when the switch portion (12a) is brought into the OFF state.,and wherein when the switching portion (12b) is in the non-weldable mode, the arc welding is not performed whichever of the ON state and the OFF state the switch portion 12a is in.

2. The welding robot (1) according to claim 1, wherein
even when the switch portion (12a) is brought into the ON state in the non-weldable mode, the arc welding is not started.

3. The welding robot (1) according to claim 1, wherein the switch portion (12a) is configured such that,
when the switch portion (12a) is in the OFF state, movement of the welding torch portion (11) in accordance with the external force is disabled, while when the switch portion (12a) is in the ON state, the welding torch portion (11) moves accompanied by movement of the grasping portion (12).

4. The welding robot (1) according to claim 1, wherein
the switch portion (12a) is provided to be located on a lower side of the grasping portion (12) when a worker performs a work by grasping the grasping portion (12).

5. The welding robot (1) according to claim 1, wherein
the grasping portion (12) is a tool capable of being mounted in the vicinity of the welding torch portion (11).

## Patentansprüche

1. Schweißroboter (1), umfassend:
einen Schweißbrennerabschnitt (11), der mit einem distalen Ende eines Arms verbunden ist, der gemäß einer externen Kraft bewegbar ist;
einen Greifabschnitt (12), der in der Lage ist, den Schweißbrennerabschnitt (11) zu bewegen; und
einen Schaltabschnitt (12a), der ausgebildet ist, um in einen EIN-Zustand gebracht zu werden, um das Lichtbogenschweißen zu starten, und ferner ausgebildet ist, um in einen AUS-Zustand gebracht zu werden, um das Lichtbogenschweißen zu beenden,
**dadurch gekennzeichnet, dass** der Schweißroboter (1) ferner umfasst:
einen weiteren Umschaltabschnitt (12b), der ausgebildet ist, um zwischen einem Schweißbar-Modus, in dem die Durchführung des Lichtbogenschweißens aktiviert ist, und einem Nichtschweißbar-Modus, in dem die Durchführung des Lichtbogenschweißens deaktiviert ist, geschaltet zu werden,
wobei, wenn sich der Umschaltabschnitt (12b) in dem Schweißbar-Modus befindet, das Lichtbogenschweißen gestartet wird, wenn der Schaltabschnitt (12a) in den EIN-Zustand gebracht wird, und das Lichtbogenschweißen beendet wird, wenn der Schaltabschnitt (12a) in den AUS-Zustand gebracht wird, und wobei, wenn sich der Umschaltabschnitt (12b) in dem Nichtschweißbar-Modus befindet, das Lichtbogenschweißen nicht durchgeführt wird, unabhängig davon, in welchem von dem EIN-Zustand und dem AUS-Zustand sich der Schaltabschnitt (12a) befindet.

2. Schweißroboter (1) nach Anspruch 1, wobei selbst wenn der Schaltabschnitt (12a) in dem Nichtschweißbar-Modus in den EIN-Zustand gebracht wird, das Lichtbogenschweißen nicht gestartet wird.

3. Schweißroboter (1) nach Anspruch 1, wobei der Schaltabschnitt (12a) derart ausgebildet ist, dass, wenn der Schaltabschnitt (12a) in dem AUS-Zustand ist, die Bewegung des Schweißbrennerabschnitts (11) gemäß der externen Kraft deaktiviert ist, während, wenn der Schaltabschnitt (12a) in dem EIN-Zustand ist, sich der Schweißbrennerabschnitt (11) begleitet von der Bewegung des Greifabschnitts (12) bewegt.

4. Schweißroboter (1) nach Anspruch 1, wobei der Schaltabschnitt (12a) so vorgesehen ist, dass er an einer unteren Seite des Greifabschnitts (12) angeordnet ist, wenn ein Arbeiter eine Arbeit durch Greifen des Greifabschnitts (12) durchführt.

5. Schweißroboter (1) nach Anspruch 1, wobei der Greifabschnitt (12) ein Werkzeug ist, das in der Nähe des Schweißbrennerabschnitts (11) montiert werden kann.

## Revendications

1. Robot de soudage (1) comprenant :
une partie de torche de soudage (11) reliée à une extrémité distale d'un bras qui est mobile selon une force externe ;
une partie de préhension (12) apte à déplacer la partie de torche de soudage (11) ; et
une partie de commutateur (12a) conçue pour être amenée dans un état MARCHE pour démarrer le soudage à l'arc et en outre conçue pour être amenée dans un état ARRÊT pour terminer le soudage à l'arc,
**caractérisé en ce que** le robot de soudage (1) comprend en outre :
une autre partie de commutation (12b) conçue pour être commutée entre un mode soudable dans lequel la réalisation du soudage à l'arc est activée et un mode non soudable dans lequel la réalisation du soudage à l'arc est désactivée,
dans lequel, lorsque la partie de commutation (12b) est dans le mode soudable, le soudage à l'arc est démarré lorsque la partie de commutateur (12a) est amenée dans l'état MARCHE et le soudage à l'arc est terminé lorsque la partie de commutateur (12a) est amenée dans l'état ARRÊT, et dans lequel, lorsque la partie de commutation (12b) est dans le mode non soudable, le soudage à l'arc n'est pas réalisé quel que soit l'état, parmi l'état MARCHE et l'état ARRÊT, dans lequel se trouve la partie de commutateur (12a).

2. Robot de soudage (1) selon la revendication 1, dans lequel même lorsque la partie de commutateur (12a) est amenée dans l'état MARCHE dans le mode non soudable, le soudage à l'arc n'est pas démarré.

3. Robot de soudage (1) selon la revendication 1, dans lequel la partie de commutateur (12a) est conçue de telle sorte que, lorsque la partie de commutateur (12a) est dans l'état ARRÊT, le mouvement de la partie de torche de soudage (11) selon la force externe est désactivé, tandis que, lorsque la partie de commutateur (12a) est dans l'état MARCHE, la partie de torche de soudage (11) se déplace accompagnée du mouvement de la partie de préhension (12).

4. Robot de soudage (1) selon la revendication 1, dans lequel la partie de commutateur (12a) est prévue pour être située sur un côté inférieur de la partie de préhension (12) lorsqu'un opérateur effectue un travail en saisissant la partie de préhension (12).

5. Robot de soudage (1) selon la revendication 1, dans lequel la partie de préhension (12) est un outil apte à être monté à proximité de la partie de torche de soudage (11).
